# EUROPÄISCHE PATENTSCHRIFT

(11) **EP 3 072 183 B1**
(45) Veröffentlichungstag und Bekanntmachung des Hinweises auf die Patenterteilung: **19.08.2020**
(21) Anmeldenummer: 14799449.5
(22) Anmeldetag: 17.11.2014
(51) Int. Cl.: H02G 3/06, H02G 3/22, H01R 13/52, H01R 13/74

(54) **WASSERDICHTES STECKVERBINDUNGSTEIL**
WATERTIGHT PLUG CONNECTION PART
ÉLÉMENT DE CONNEXION ENFICHABLE ÉTANCHE À L'EAU

(30) Priorität: 22.11.2013 DE 102013223942
(43) Veröffentlichungstag der Anmeldung: 28.09.2016
(73) Patentinhaber: LQ Mechatronik-Systeme GmbH, 71691 Freiberg am Neckar (DE)
(72) Erfinder: QUERO, José, 74321 Bietigheim-Bissingen (DE); MOSCICKI, Marcin, 74369 Löchgau (DE); ENGBER, Hermann, 70192 Stuttgart (DE)
(74) Vertreter: Patentanwälte Ruff, Wilhelm, Beier, Dauster & Partner mbB
(86) Internationale Anmeldenummer: PCT/EP2014/074779
(87) Internationale Veröffentlichungsnummer: WO 2015/074996

(56) Entgegenhaltungen:
- DE-A1- 2 637 727
- DE-A1-102008 005 494
- DE-U1-202008 001 842
- US-A- 4 822 293
- US-A1- 2004 043 667
- US-A1- 2010 190 375

## Beschreibung

Die Erfindung betrifft ein elektrisches Steckverbindungsteil mit einem Steckgehäuse, in dem elektrische Steckkontakte für eine Steckverbindung mit einem komplementären Steckverbindungsteil integriert sind, und das einen mit einem Außengewinde versehenen Schraubabschnitt zur Sicherung des Steckgehäuses in einem Durchtritt eines ortsfesten Funktionsteils umfasst, sowie mit einem Dichtungsring zum Abdichten des Steckgehäuses relativ zu einem komplementären Gegenstück.

Ein derartiges elektrisches Steckverbindungsteil ist durch einen elektrischen Einschraubsteckverbinder der Anmelderin allgemein bekannt. Ein derartiger Einschraubsteckverbinder ist zum einen dafür vorgesehen, eine elektrische Verbindung herzustellen. Zum anderen muss er wasser- oder feuchtigkeitsdicht gestaltet sein, um die elektrische Verbindung auch bei feuchter oder nasser Umgebung sicher aufrechterhalten zu können. Zudem ist es bei einem Einschraubsteckverbinder notwendig, eine Befestigung mit einem ausreichend großen Drehmoment vorzunehmen, um zu gewährleisten, dass in normalem Gebrauchszustand kein Lösen des Steckverbinders erfolgen kann. Der Steckverbinder weist ein Steckgehäuse auf, das einen Schraubabschnitt umfasst, der durch ein Außengewinde gebildet ist. Ein Anschlagbund des Steckgehäuses ist mit einer axial wirkenden Dichtung versehen, um in eingeschraubtem Zustand des Steckverbinders im Bereich eines entsprechenden Durchtritts eines Funktionsteils eine ausreichende Abdichtung zu ermöglichen. Nachteilig bei derart verschraubten Steckverbindungsteilen ist es, dass keine definierte Ausrichtung des Polbilds der Steckkontakte in am Funktionsteil festgelegtem Montagezustand des Steckverbinders möglich ist. Denn der Einschraubsteckverbinder muss zur Erzielung der ausreichenden Dichtheit bis hin zur Dichtfläche fest eingeschraubt werden. Zudem muss gewährleistet sein, dass der Einschraubsteckverbinder in abgedichteter Funktionsstellung auch so stark festgedreht ist, dass er sich nicht von selbst lösen kann.

US 4 822 293 A und DE 20 2008 001842 U1 offenbaren derartige elektrische Steckverbindungsteile.

Aufgabe der Erfindung ist es, ein elektrisches Steckverbindungsteil der eingangs genannten Art zu schaffen, das eine Ausrichtung des Polbilds der Steckkontakte ermöglicht und dennoch in montiertem Zustand eine dichte Verbindung mit dem Durchtritt des Funktionsteils ermöglicht, die wenigstens die Schutzklasse IP65 der DIN EN 60529 gewährleistet.

Diese Aufgabe wird dadurch gelöst, dass an den Schraubabschnitt eine Radialnut zur Aufnahme des Dichtungsrings anschließt und dass der Dichtungsring als Radialdichtung gestaltet ist, die in montiertem Zustand den Schraubabschnitt des Steckgehäuses radial zu einem komplementären Gegenstück, insbesondere zu einer Innenwandung des Durchtritts oder zu einer Kontermutter, abdichtet. Dadurch, dass der Dichtungsring als Radialdichtung gestaltet ist, kann eine Abdichtung des Steckgehäuses gegenüber dem Durchtritt radial erfolgen, so dass eine Verdrehung des Steckverbindungsteils in eingeschraubtem Zustand um bestimmte Drehwinkel keinen Einfluss auf die Dichtwirkung des Dichtungsrings hat. Diese Verdrehbarkeit ermöglicht erfindungsgemäß eine exakte Positionierung des Polbilds der Steckkontakte, so dass sie in montiertem Zustand des Steckverbindungsteils symmetrisch zu einer entsprechenden Vertikalen oder Horizontalen des ortsfesten Funktionsteils ausgerichtet werden können. Dies ermöglicht zum einen ein einfaches und intuitives Ausrichten und Einstecken eines komplementären Steckverbindungsteils. Zum anderen vermittelt ein symmetrisch ausgerichtetes Polbild des Steckverbindungsteils einen qualitativ hochwertigen Eindruck. Ortsfeste Funktionsteile im Sinne der Erfindung sind insbesondere Wandungsabschnitte von Trägergehäusen elektrischer oder elektronischer Module, Gehäuseabschnitte von Funktionsmodulen, Wandungsabschnitte und Trägerplattformen von Steuerschränken oder Schaltschrankmodulen oder andere, mit entsprechenden Durchtritten versehene Flächen von Maschinen- oder Anlagenkomponenten.

In Ausgestaltung der Erfindung ist dem Schraubabschnitt des Steckgehäuses eine Kontermutter zugeordnet, die mit einem axial wirksamen Dichtring an ihrer dem Funktionsteil zugewandten Stirnfläche versehen ist. Die Kontermutter weist ein Innengewinde auf, das komplementär zu dem Außengewinde des Schraubabschnitts des Steckgehäuses gestaltet ist, um ein Auf- und Abschrauben der Kontermutter relativ zum Schraubabschnitt des Steckgehäuses zu ermöglichen.

In weiterer Ausgestaltung der Erfindung ist koaxial zu dem Schraubabschnitt am Steckgehäuse ein radial nach außen abragender Anschlagbund vorgesehen, der insbesondere einen Schraubweg der Kontermutter begrenzt. Falls das Steckverbindungsteil ohne Kontermutter direkt in ein Innengewinde eines Durchtritts eines entsprechenden Funktionsteils eingeschraubt wird, kann der Anschlagbund dazu dienen, die maximale Einschraubtiefe des Steckverbindungsteils in dem Durchtritt zu begrenzen. Je nach Ausführung kann vorgesehen sein, dass der Anschlagbund oder die Kontermutter zusätzlich zu der Radialdichtung des Schraubabschnitts des Steckgehäuses noch mit einem axialen Dichtring versehen ist, der an einer dem Funktionsteil zugewandten Stirnfläche des Anschlagbunds vorgesehen ist.

In weiterer Ausgestaltung der Erfindung weist die Kontermutter an ihrem Innenumfang ein zu dem Außengewinde des Steckgehäuses komplementäres Innengewinde sowie einen axial an das Innengewinde anschließenden Ringnutabschnitt auf, der zum dichten radialen Umschließen der Radialdichtung des Schraubabschnitts des Steckgehäuses vorgesehen ist. Zwischen der Kontermutter und der Radialdichtung des Schraubabschnitts des Steckgehäuses ist daher eine dichte Verbindung erzielbar. Falls die Kontermutter selbst ergänzend mit einem axialen Dichtring versehen ist, der an einer dem Funktionsteil zugewandten Dichtfläche der Kontermutter vorgesehen ist, ist zusätzlich eine Dichtung des Steckverbindungsteils einschließlich Kontermutter relativ zu dem den Durchtritt umgebenden Wandungsabschnitt des Funktionsteils erzielbar.

In weiterer Ausgestaltung der Erfindung ist eine Gewindesteigung des Schraubabschnitts derart auf eine Breite der Radialdichtung abgestimmt, dass eine Drehung über einen Gewindegang zu einem Axialversatz führt, der kleiner oder gleich der Breite der Radialdichtung ist. Dadurch ist gewährleistet, dass eine Verdrehung des Steckverbindungsteils relativ zum Funktionsteil um einen einzelnen Gewindegang, d.h. um 360°, die Dichtwirkung der Radialdichtung nicht beeinträchtigt. Falls das Steckverbindungsteil daher vollständig in dem Durchtritt des Funktionsteils eingeschraubt ist, gewährleistet ein Herausdrehen des Steckverbindungsteils um bis zu etwas mehr als 360°, d.h. eine Drehung um einen vollständigen Gewindegang, dennoch eine gleichblei-bende Dichtwirkung, da die Radialdichtung auch bei einem entsprechend begrenzten Heraus-drehen noch ihre Dichtwirkung zum Innenumfang des Durchtritts hin beibehält. Gleiches gilt für den Fall, dass das Steckverbindungsteil nicht direkt in einen entsprechenden Durchtritt einge-schraubt ist, sondern der Schraubabschnitt des Steckgehäuses noch durch eine Kontermutter umschlossen ist, die eine axiale Abdichtung zum entsprechenden Wandungsabschnitt des Funktionsteils bewirkt. Die maßgebliche Dichtwirkung der Radialdichtung erfolgt dann zwischen der Radialdichtung des Schraubabschnitts und dem Innenmantel der Kontermutter.

In weiterer Ausgestaltung der Erfindung entspricht eine durch den Ringnutabschnitt der Kontermutter erzeugbare axiale Spaltabdeckung wenigstens der axialen Erstreckung eines Gewindegangs des Innengewindes der Kontermutter. Diese Ausgestaltung gewährleistet eine ausreichende Dichtwirkung zwischen Kontermutter und Schraubabschnitt des Steckgehäuses auch bei einem erneuten Herausdrehen des Schraubabschnitts um einen einzelnen Gewindegang relativ zur Kontermutter, um die gewünschte Positionierung des Polbilds zu erzielen.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in teilgeschnittener isometrischer Darstellung eine Ausführungsform eines erfindungsgemäßen elektrischen Steckverbindungsteils,
- Fig. 2: das Steckverbindungsteil nach Fig. 1 in einer Explosionsdarstellung,
- Fig. 3: in einer Schnittdarstellung das Steckverbindungsteil nach den Fig. 1 und 2 in montiertem Funktionszustand an einer Wandung eines Funktionsteils und
- Fig. 4 bis 8: verschiedene Schritte der Montage eines elektrischen Steckverbindungsteils an einem Funktionsteil in Form eines Motoranschlusskastens.

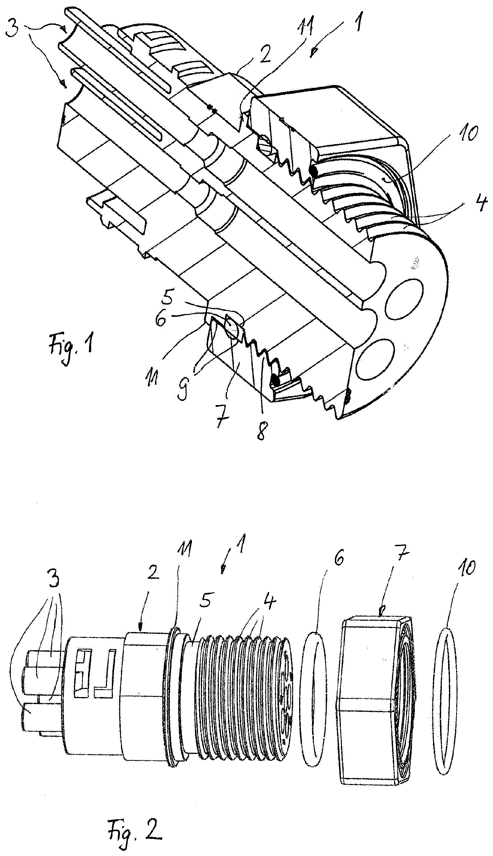

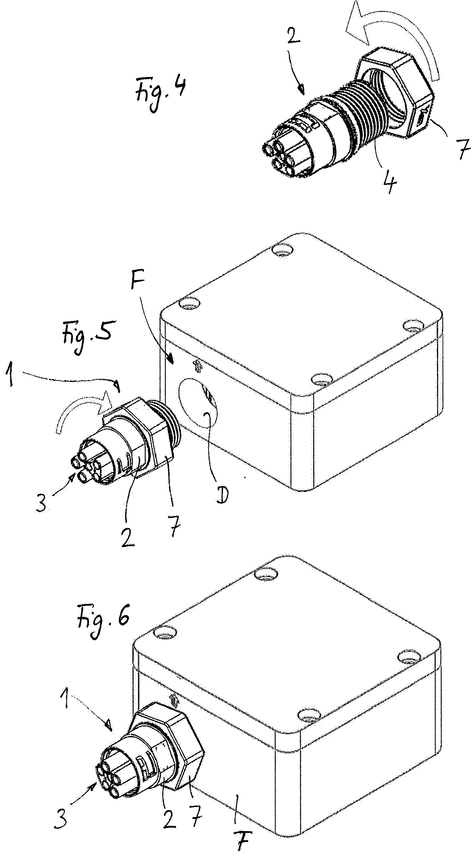

Ein elektrisches Steckverbindungsteil 1 nach den Fig. 1 bis 8 ist als Einschraubstecker gestaltet, der in einen Durchtritt D eines als Funktionsteil dienenden Motoranschlusskastens F einschraubbar ist. Der Einschraubstecker 1 weist ein aus Kunststoff bestehendes Steckgehäuse 2 auf, in dem mehrere Steckkontakte 3 in grundsätzlich bekannter Weise integriert sind. Das Steckgehäuse 2 weist einen Schraubabschnitt 4 auf, der durch ein einstückig am Steckgehäuse 2 angeformtes Außengewinde gebildet ist. Die elektrischen Steckkontakte 3 bilden auf einer dem Schraubabschnitt 4 gegenüberliegenden Stirnseite ein Polbild, das anhand der Fig. 4 bis 8 gut erkennbar ist.

An den Schraubabschnitt 4 des Steckgehäuses 2 schließt axial zur Mitte des Steckgehäuses 2 hin eine ringförmige Radialnut 5 an, in der ein Dichtungsring 6 aus einem geeigneten Elastomermaterial eingebettet ist. Der Dichtungsring 6 bildet eine Radialdichtung im Bereich des Schraubabschnitts 4, wie nachfolgend näher beschrieben wird. In geringem axialem Abstand zu der Radialnut 5 weist das Steckgehäuse 2 einen einstückig angeformten, radial nach außen ragenden Ringbund 11 auf, der als Anschlagbund im Sinne der Erfindung gestaltet ist.

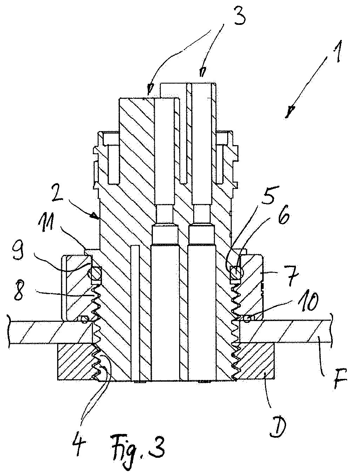

Beim dargestellten Ausführungsbeispiel ist der Einschraubstecker 1 zusätzlich mit einer Kontermutter 7 versehen, die als Sechskantmutter gestaltet ist und mit ihrem Innengewinde 8 komplementär auf das Außengewinde des Schraubabschnitts 4 des Steckgehäuses 2 abgestimmt ist. Die Kontermutter 7 weist auf ihrer vom Polbild der elektrischen Steckkontakte 3 abgewandten Stirnseite eine Ringnut auf, die axial offen ist und zur Aufnahme eines axialen Dichtungsrings 10 dient. Das Innengewinde 8 erstreckt sich nicht über die gesamte axiale Länge der Kontermutter 7, sondern lediglich über einen Teilbereich der axialen Länge des Innenumfangs der Kontermutter 7. An das Innengewinde 8 schließt eine zylindrische Ringnut 9 an, die in ihrem Innendurchmesser auf den Außendurchmesser des Steckgehäuses 2 im Bereich des Schraubabschnitts 4 abgestimmt ist. Beim axialen Aufschrauben der Kontermutter 7 auf den Schraubabschnitt 4 des Steckgehäuses 2 gerät die dem Ringnutabschnitt 9 benachbarte Stirnseite der Kontermutter 7 in der aufgeschraubten Endposition an dem Anschlagbund 11 des Steckgehäuses 2 axial zur Anlage, wie Fig. 3 zu entnehmen ist. Die Axialerstreckung des Ringnutabschnitts 9 ist 1,5- bis 2-mal so groß wie die Axialerstreckung der Radialnut 5, in der die Radialdichtung 6 des Schraubabschnitts 4 aufgenommen ist. In vollständig aufgeschraubtem Zustand der Kontermutter 7 gemäß Fig. 3 liegt die Stirnseite der Kontermutter 7 an dem Anschlagbund 11 axial an. Der Ringnutabschnitt 9 überdeckt die Radialnut 5 vollständig und dichtet mit der Radialdichtung 6 ab. Das Innengewinde 8 greift im Bereich der Gewindegänge noch in das Außengewinde des Schraubabschnitts 4 ein.

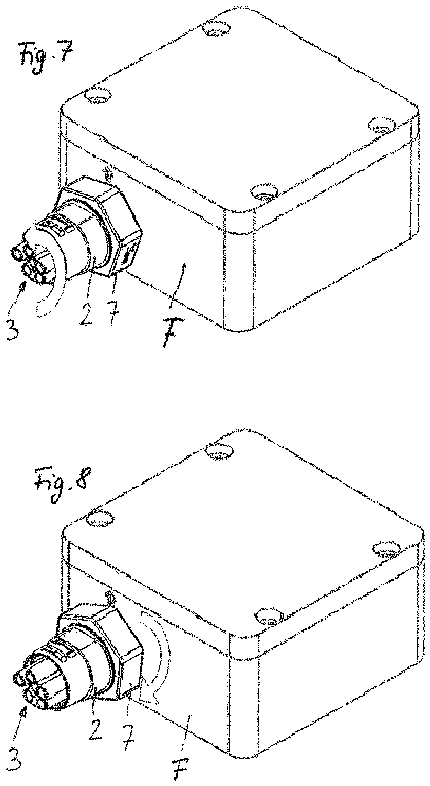

Zum Montieren des Einschraubsteckers 1 wird zunächst gemäß Fig. 4 die Kontermutter 7 auf den Schraubabschnitt 4 axial aufgeschraubt, bis die Kontermutter 7 am Anschlagbund 11 zur Anlage kommt. Anschließend wird das Steckgehäuse 2 einschließlich Kontermutter 7 in den Durchtritt D des Motoranschlusskastens F axial eingeführt, wobei das Außengewinde des Schraubabschnitts 4 in Schraubeingriff mit einem nicht näher bezeichneten, komplementären Innengewinde des Durchtritts D in Eingriff gelangt. Nun wird der Einschraubstecker 1 so weit eingeschraubt, bis der axiale Dichtungsring 10 der Kontermutter 7 an dem Wandungsabschnitt des Motoranschlusskastens F zur Anlage kommt (siehe Fig. 3). Der Einschraubstecker 1 wird weiter eingeschraubt, bis der axiale Dichtungsring 10 komprimiert ist und die entsprechende Stirnseite der Kontermutter 7 gegen den Wandungsabschnitt des Motoranschlusskastens F gepresst ist. Nach dem vollständigen Einschrauben des Einschraubsteckers 1 gemäß Fig. 6 wird die Ausrichtung des Polbilds der elektrischen Steckkontakte 3 geprüft. Die korrekte Positionierung des Polbilds sollte gemäß den Fig. 7 und 8 erfolgen. Falls das Polbild gemäß Fig. 6 noch gegenüber dieser gewünschten Ausrichtung verdreht ist, wird in einfacher Weise der gesamte Einschraubstecker 1 wieder um den gewünschten Winkel zurück - d.h. aufgedreht. Anschließend wird das Steckgehäuse 2 in dieser Ausrichtung manuell oder durch ein Werkzeug festgehalten und die Kontermutter 7 wird gemäß der Pfeildarstellung in Fig. 8 soweit wieder zum Motoranschlusskasten F hin festgedreht, bis die Stirnseite der Kontermutter 7 mit dem axialen Dichtungsring 10 dicht an dem Wandungsabschnitt des Motoranschlusskastens F anliegt. Nun ist der Einschraubstecker 1 abgedichtet fixiert am Motoranschlusskasten F. Die gesamte Ausführung der Dichtwirkungen und der Montage des Einschraubsteckers 1 am Motoranschlusskasten F entsprechen wenigstens der Schutzklasse IP65.

Bei der Ausführungsform nach den Fig. 1 bis 8 ist das elektrische Steckverbindungsteil als Einschraubstecker gestaltet. In gleicher Weise kann das Steckverbindungsteil aber auch als Einschraubbuchse gestaltet sein. Die Einschraubbuchse ist in gleicher Weise gestaltet wie der Einschraubstecker 1 gemäß den Fig. 1 bis 8. Einziger Unterschied ist die Gestaltung der Steckkontakte und des entsprechenden Polbilds, die zwangsläufig komplementär als Gegenstück zu der Steckerform gestaltet sind.

## Patentansprüche

1. Elektrisches Steckverbindungsteil (1) mit einem Steckgehäuse (2), in dem elektrische Stecckontakte (3) für eine Steckverbindung mit einem komplementären Steckverbindungsteil integriert sind, und das einen mit einem Außengewinde versehenen Schraubabschnitt: (4) zur Sicherung des Steckgehäuses in einem Durchtritt (D) eines ortsfesten Funktionsteils (F) umfasst, sowie mit einem Dichtungsring (6) zum Abdichten des Steckgehäuses relativ ; zu einem komplementären Gegenstück, **dadurch gekennzeichnet, dass** an den Schraubabschnitt (4) eine Radialnut (5) zur Aufnahme des Dichtungsrings (6) anschließt, und dass der Dichtungsring als Radialdichtung (6) gestaltet ist, die in montiertem Zustand den Schraubabschnitt (4) des Steckgehäuses (2) radial zu dem komplementären Gegenstück abdichtet.

2. Elektrisches Steckverbindungsteil nach Anspruch 1, **dadurch gekennzeichnet, dass** als komplementäres Gegenstück eine Innenwandung des Durchtritts (D) oder eine Kontermutter (7) vorgesehen ist.

3. Elektrisches Steckverbindungsteil nach Anspruch 1 oder 2, **dadurch gekennzeichnet, dass** dem Schraubabschnitt (4) des Steckgehäuses (2) eine Kontermutter (7) zugeordnet ist, die mit einem axial wirksamen Dichtring (10) an ihrer dem Funktionsteil (F) zugewandten Stirnfläche versehen ist.

4. Elektrisches Steckverbindungsteil nach Anspruch 1, 2 oder 3, **dadurch gekennzeichnet, dass** koaxial zu dem Schraubabschnitt (4) am Steckgehäuse (2) ein radial nach außen ab-ragender Anschlagbund (11) vorgesehen ist.

5. Elektrisches Steckverbindungsteil nach Anspruch 4, **dadurch gekennzeichnet, dass** der Anschlagbund (11) einen Schraubweg der Kontermutter (7) begrenzt.

6. Elektrisches Steckverbindungsteil nach Anspruch3, **dadurch gekennzeichnet, dass** die Kontermutter (7) an ihrem Innenumfang ein zu dem Außengewinde des Steckgehäuses (2) komplementäres Innengewinde (8) sowie einen axial an das Innengewinde (8) anschließenden Ringnutabschnitt (9) aufweist, der zum dichten radialen Umschließen der Radialdichtung (6) des Schraubabschnitts (4) des Steckgehäuses (2) vorgesehen ist.

7. Elektrisches Steckverbindungsteil nach einem der vorhergehenden Ansprüche, **dadurch gekennzeichnet, dass** eine Gewindesteigung des Schraubabschnitts (4) derart auf eine Breite der Radialdichtung (6) abgestimmt ist, dass eine Drehung über einen Gewindegang zu einem Axialversatz führt, der kleiner oder gleich der Breite der Radialdichtung ist.

8. Elektrisches Steckverbindungsteil nach einem der vorhergehenden Ansprüche, **dadurch gekennzeichnet, dass** eine durch den Ringnutabschnitt (9) der Kontermutter (7) erzeugbare axiale Spaltabdeckung wenigstens der axialen Erstreckung eines Gewindegangs des Innengewindes (8) der Kontermutter (7) entspricht.

## Claims

1. Electric plug connection part (1), comprising a rack (2) in which electric plug contacts (3) for a plug connection with a complementary plug connection part are integrated, and which includes a screw portion (4) provided with an external thread for securing the rack in a passage (D) of a function part (F) fixed in location, and comprising a sealing ring (6) for sealing the rack relative to a complementary counterpart,
**characterized in that**
a radial groove (5) for receiving the sealing ring (6) adjoins the screw portion (4), and **in that** the sealing ring is designed as a radial seal (6) which, in the assembled state, seals the screw portion (4) of the rack (2) radially in relation to the complementary counterpart.

2. Electric plug connection part according to claim 1, **characterized in that** an inner wall of the passage (D) or a counter nut (7) is provided as the complementary counterpart.

3. Electric plug connection part according to claim 1 or 2, **characterized in that** a counter nut (7) is associated to the screw portion (4) of the rack (2), which nut is provided with an axially acting sealing ring (10) on the end face thereof facing the function part (F).

4. Electric plug connection part according to claim 1, 2 or 3, **characterized in that** a radially outwards projecting stop collar (11) is provided on the rack (2) coaxially to the screw portion (4).

5. Electric plug connection part according to claim 4, **characterized in that** the stop collar (11) limits the screwing path of the counter nut (7).

6. Electric plug connection part according to claim 3, **characterized in that** the counter nut (7) has on the inner circumference thereof an internal thread (8) complementary to the external thread of the rack (2) and an annular groove portion (9) adjoining axially to the internal thread (8), which groove portion is provided for tight radial enclosing of the radial seal (6) of the screw portion (4) of the rack (2).

7. Electric plug connection part according to any of the preceding claims, **characterized in that** a thread pitch of the screw portion (4) is matched to a width of the radial seal (6) such that turning over a thread turn causes an axial offset which is smaller than or equal to the width of the radial seal.

8. Electric plug connection part according to any of the preceding claims, **characterized in that** an axial gap covering, producible by the annular groove portion (9) of the counter nut (7), corresponds at least to the axial extension of a thread turn of the internal thread (8) of the counter nut (7).

## Revendications

1. Élément de connexion enfichable (1) électrique, comprenant un boîtier de fiche (2) où des fiches de contact (3) électriques pour une fiche de raccordement à un élément de connexion enfichable complémentaire sont intégrées et présentant une section à visser (4) pourvue d'un filetage extérieur pour attacher le boîtier de fiche dans un passage (D) d'une partie fonctionnelle (F) fixe ainsi que comprenant une bague d'étanchéité (6) pour étancher le boîtier de fiche par rapport à une contrepartie complémentaire,
**caractérisé en ce que**
la section à visser (4) est contigue à une rainure radiale (5) pour recevoir la bague d'étanchéité (6), et **en ce que** la bague d'étanchéité est sous forme de joint radial (6) étanchéisant, dans l'état assemblé, la section à visser (4) du boîtier de fiche (2) radialement par rapport à la contrepartie complémentaire.

2. Élément de connexion enfichable électrique selon la revendication 1, **caractérisé en ce qu'**une paroi intérieure du passage (D) ou un contre-écrou (7) est fourni en tant que contrepartie complémentaire.

3. Élément de connexion enfichable électrique selon la revendication 1 ou 2, **caractérisé en ce qu'**un contre-écrou (7) est associé à la section à visser (4) du boîtier de fiche (2), ledit contre-écrou est pourvu d'une bague d'étanchéité (10) à effet axial sur sa face frontale tournée vers la partie fonctionnelle (F).

4. Élément de connexion enfichable électrique selon la revendication 1, 2 ou 3, **caractérisé en ce que** coaxialement par rapport à la section à visser (4) sur le boîtier de fiche (2) un épaulement de butée (11) saillant radialement vers l'extérieur est prévu.

5. Élément de connexion enfichable électrique selon la revendication 4, **caractérisé en ce que** l'épaulement de butée (11) limite une course de vissage du contre-écrou (7).

6. Élément de connexion enfichable électrique selon la revendication 3, **caractérisé en ce que** le contre-écrou (7) présente sur sa circonférence intérieure un filetage intérieur (8) complémentaire au filetage extérieur du boîtier de fiche (2) ainsi qu'une section de rainure annulaire (9) adjacente axialement au filetage intérieur (8), ladite section de rainure annulaire prévue pour un entourage étanche radiale du joint radial (6) de la section à visser (4) du boîtier de fiche (2).

7. Élément de connexion enfichable électrique selon l'une quelconque des revendications précédentes, **caractérisé en ce qu'**un pas de filetage de la section à visser (4) est adapté à une largeur du joint radial (6) de telle manière qu'une rotation sur un tour de filet produit un décalage axial inférieur ou égal à la largeur du joint radial.

8. Élément de connexion enfichable électrique selon l'une quelconque des revendications précédentes, **caractérisé en ce qu'**un recouvrement de fente axiale, pouvant être produit par la section de rainure annulaire (9) du contre-écrou (7), correspond au moins à l'extension axiale d'un tour de filet du filetage intérieur (8) du contre-écrou (7).
